# EUROPEAN PATENT SPECIFICATION

(11) **EP 4 073 421 B1**
(45) Date of publication and mention of the grant of the patent: **27.08.2025**
(21) Application number: 20811352.2
(22) Date of filing: 26.11.2020
(51) Int. Cl.: F21S 41/143, F21S 41/25, F21S 41/265, F21S 45/48, F21V 5/00, F21V 29/70

(54) **VEHICLE LIGHTING DEVICE**
FAHRZEUGBELEUCHTUNGSVORRICHTUNG
DISPOSITIF D'ÉCLAIRAGE DE VÉHICULE

(30) Priority: 11.12.2019 FR 1914209
(43) Date of publication of application: 19.10.2022
(73) Proprietor: Valeo Vision, 93012 Bobigny Cedex (FR)
(72) Inventor: REDJEM SAAD, Lotfi, 93012 BOBIGNY Cedex (FR); RONGIER, Clement, 93012 BOBIGNY Cedex (FR); ROELS, Sebastien, 93012 BOBIGNY Cedex (FR)
(74) Representative: Valeo Visibility
(86) International application number: PCT/EP2020/083529
(87) International publication number: WO 2021/115796

(56) References cited:
- EP-A1- 1 681 510
- EP-A1- 3 076 070
- EP-A1- 3 109 541
- EP-A1- 3 173 684
- CN-A- 108 828 883
- JP-A- 2016 001 270
- US-A1- 2009 316 423
- US-A1- 2010 097 579
- US-A1- 2015 073 227

## Description

This invention is related to the field of the internal design of vehicle lighting devices, to avoid excessive temperature increase therein.

Current light devices are mainly based on solid-state light sources, such as Light Emitting Diodes (LED). These light sources are usually arranged in a matrix structure and the lighting device comprises a plurality of lens to project the light pattern produced by the light sources.

These lenses are arranged in a metallic barrel which provides structural support and dimensional stability. However, the position of the lens near the light source makes that light absorption increases the temperature of the lenses, thus reaching a temperature which is very close or even above the limit operation temperature of the lens. This overheating can deteriorate the optical properties of the lenses, so a solution for this problem is sought.

Documents EP 3 173 684 A1, US 2009/316423 A1 and EP 3 109 541 A1 disclose technical solutions with dissipating means for lighting devices.

In a first inventive aspect, the invention provides a solution for the aforementioned technical problem by means of a vehicle lighting device according to claim 1.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

The support barrel is a part which is commonly used in some solid-state light source devices. This barrel is used as a support for a plurality of lenses which project the light pattern emitted by the light sources. This barrel tends to overheat due to light absorption and this invention provides a way of avoiding this overheating.

In some particular embodiments, the vehicle lighting device comprises more than one solid-state light source, such as a plurality of Light Emitting Diodes (LEDs).

In some particular embodiments, the vehicle lighting device comprises more than one protruding element.

If the barrel and holder designs allow it, a higher number of protruding elements means a higher amount of dissipated heat.

In some particular embodiments, two adjacent protruding elements are separated by at least 1 cm.

This distance is enough to avoid interference between the heat dissipation between the protruding elements.

According to the invention, the protruding element is a protruding fin.

This fin is a very appropriate embodiment of the protruding element to dissipate heat from the support barrel.

Furthermore, the protruding element is circumferentially arranged around the barrel surface, covering a whole circumference of the barrel surface.

This allows that the whole contour of the barrel surface may be used for heat dissipation.

Besides, according to the invention, the protruding element protrudes from the barrel surface in one dissipation direction a distance greater than in the rest of directions. In more particular embodiments, the protruding element protrudes from the barrel surface in one dissipation direction a distance greater than 2 cm, and particularly greater than 5 cm, measured radially from the barrel surface.

A preferred dissipation direction is useful when the inner space of the lighting device provides a greater space in one direction than in other ones.

In some particular embodiments, the protruding element has a thickness comprised between 1 mm and 5 mm.

This thickness is enough to allow heat dissipation in the protruding elements.

In some particular embodiments, the protruding element is bended. In more particular embodiments, the protruding element is bended more than once.

A bended element may adapt to the inner space available, and saves total length while keeping a heat dissipation surface. The number of folds is adapted to the geometry in the interior of the lighting device.

In some particular embodiments, the protruding element is manufactured in the same part as the barrel, having a single-block arrangement. In other particular embodiments, the protruding element is a separate part from the barrel and is attached to the barrel surface.

Both alternatives are useful and operative, depending on the design of the barrel and the lighting device.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a section view of a particular embodiment of a vehicle lighting device according to the invention.
[Fig. 2] shows a perspective view of the barrel and fins arrangement of an embodiment of a lighting device according to the invention.
[Fig. 3] shows a perspective view of the barrel and fins arrangement of an alternative embodiment of a lighting device according to the invention.
[Fig. 4] shows a thermal analysis of the embodiment of Figure 3.

In these figures, the following reference numbers have been used:
- 1: Housing
- 2: LEDs
- 3: Barrel
- 30: Barrel surface
- 31: Holder protrusion of the barrel
- 4: Holder element
- 5: Lens
- 6: Protruding fin
- 10: Lighting device
- 100: Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

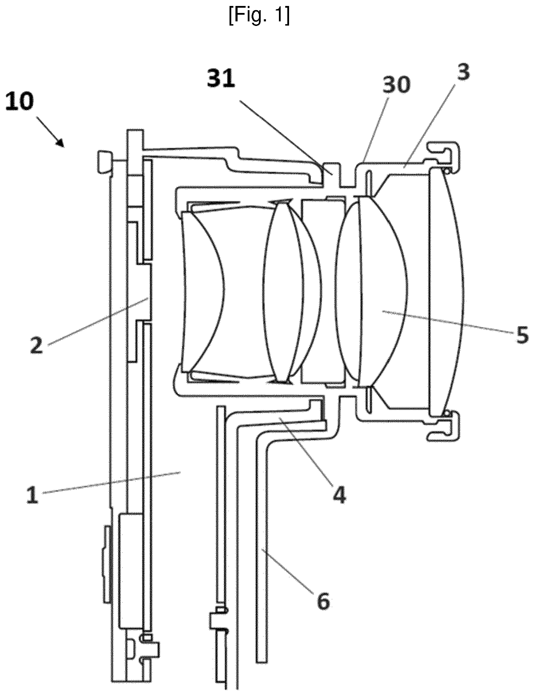

Figure 1 shows a section view of a particular embodiment of a vehicle lighting device 1 according to the invention. In this figure, the vehicle lighting device 10 comprises
- a housing 1;
- a plurality of LEDs 2 installed in the housing 1;
- a support barrel 3;
- a holder element 4; and
- a plurality of lenses 5 supported in the support barrel 3.

The plurality of LEDs 2 are installed in the housing and are configured to emit a light pattern, due to their particular arrangement. This light pattern is received and projected by the plurality of lenses 5, which are arranged to as to provide a final pattern to perform a particular lighting functionality.

The support barrel 3 is intended to provide a support for the plurality of lenses 5. This support barrel 3 comprises a barrel surface 30 and a holder protrusion 31 which protrudes from the barrel surface 30. This holder protrusion 31 is used to attach the support barrel to the holder element 4, which is in turn attached to the housing 1. Hence, the holder protrusion 31 is the attachment point of the support barrel 3 to the housing 1, via the holder element 4.

The support barrel 3 further comprises a plurality of protruding fins 6 which protrude from the barrel surface 30 in a distance greater than the holder protrusion 31. The protruding fins 6 are therefore longer than the holder protrusion 31, which has the only aim to provide an attachment point for the support barrel 3 to the holder element 4.

These protruding fins are separated by 2 cm between them and have a thickness of 2 mm, to allow a correct heat dissipation.

Heat coming from the light absorption performed by the barrel is conducted along the conductive surface of the barrel and then dissipated in the protruding fins 6, so that the lenses 5 do not reach a dangerous temperature.

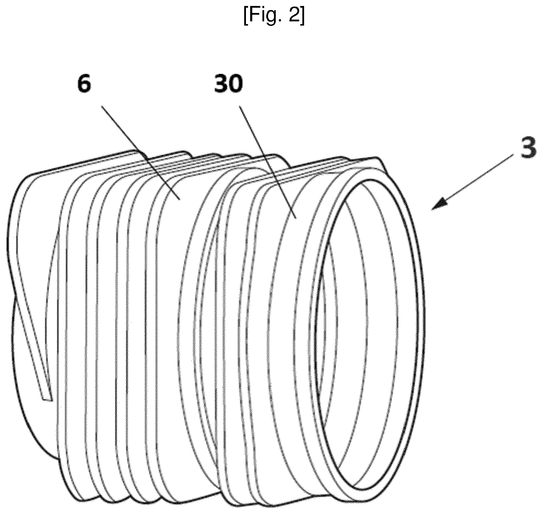

Figure 2 shows a perspective view of the barrel 3 and fins 6 arrangement of an embodiment of a lighting device according to the invention. In this figure, only the barrel 3 and the protruding fins 6 are illustrated, for the sake of clarity.

In this figure, it may be observed how the protruding fins 6 are circumferentially arranged around the barrel surface 30, covering a whole circumference of the barrel surface 30. Hence, heat is dissipated in all directions of the barrel surface 30.

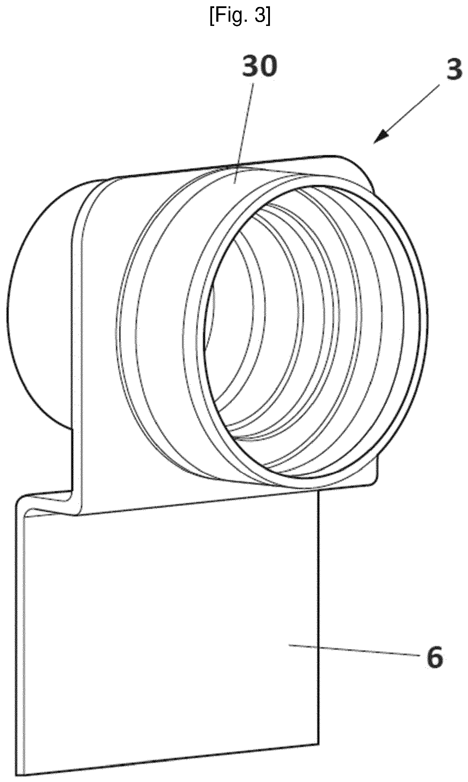

Figure 3 shows a perspective view of the barrel 3 and fins 6 arrangement in a different embodiment of a lighting device according to the invention. As in the previous figure, only the barrel 3 and the protruding fins 6 are illustrated.

In this embodiment, the only protruding fin 6 protrudes from the barrel surface 30 in one dissipation direction d a distance greater than in the rest of directions. This dissipation direction d is used since the lighting device provides a greater void space in this direction, so heat may be more easily dissipated. The protruding fin 6 protrudes from the barrel surface 30 in the dissipation direction d a distance greater than 5 cm, measured radially from the barrel surface 30. Hence, heat dissipation is increased.

To maximize the heat dissipation surface in this reduced space, the protruding fin 6 is bended twice.

In the embodiment shown in this figure, the protruding fin 6 is manufactured in the same part as the barrel 3, having a single-block arrangement. However, in different embodiments, the protruding fin 6 may be a separate part from the barrel 3 and is attached to the barrel surface 30 subsequently.

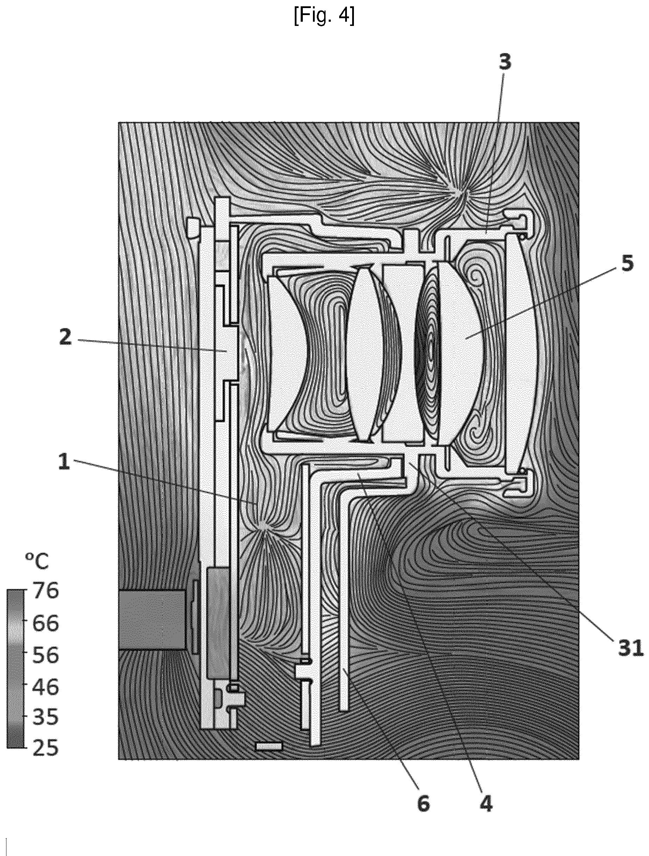

Figure 4 shows a thermal analysis of the embodiment of figure 3.

In this figure, it may be seen how the heat is transferred from the support barrel 3 to the protruding fins 6, so that the final temperature in the lenses 5 is lower than the risk threshold temperature.

## Claims

1. Vehicle lighting device (10) comprising:
- a housing (1);
- a light source (2) installed in the housing (1), configured to emit a light pattern;
- a support barrel (3), with a barrel surface (30) and a holder protrusion (31) protruding from the barrel surface (30);
- a holder element (4), arranged to couple the holder protrusion (31) to the housing (1); and
- a plurality of lenses (5) supported in the support barrel (3), the lenses (5) being configured to project the light pattern;
- wherein the support barrel (3) further comprises at least a protruding element (6) which protrudes from the barrel surface (30) in a distance greater than the holder protrusion (31) and wherein the protruding element is a protruding fin to dissipate heat from the support barrel
**characterized in that** the protruding element (6) is circumferentially arranged around the barrel surface (30), covering a whole circumference of the barrel surface (30) and **in that** the protruding element (6) protrudes from the barrel surface (30) in one dissipation direction (d) a distance greater than in the rest of directions.

2. Vehicle lighting device (10) according to claim 1, comprising more than one light source (2).

3. Vehicle lighting device (10) according to any of the preceding claims, comprising more than one protruding element (6).

4. Vehicle lighting device (10) according to claim 3, wherein two adjacent protruding elements (6) are separated by at least 1 cm.

5. Vehicle lighting device (10) according to claim 1, wherein the protruding element (6) protrudes from the barrel surface (30) in one dissipation direction (d) a distance greater than 2 cm, and particularly greater than 5 cm, measured radially from the barrel surface (30).

6. Vehicle lighting device (10) according to any of the preceding claims, wherein the protruding element (6) has a thickness comprised between 1 mm and 5 mm.

7. Vehicle lighting device (10) according to any of the preceding claims, wherein the protruding element (6) is bended.

8. Vehicle lighting device (10) according to claim 7, wherein the protruding element (6) is bended more than once.

9. Vehicle lighting device (10) according to any of the preceding claims, wherein the protruding element (6) is manufactured in the same part as the barrel (3), having a single-block arrangement.

10. Vehicle lighting device according to any of claims 1 to 7, wherein the protruding element (6) is a separate part from the barrel (3) and is attached to the barrel surface (30).

## Patentansprüche

1. Fahrzeugbeleuchtungsvorrichtung (10), die Folgendes umfasst:
- ein Gehäuse (1);
- eine in dem Gehäuse (1) installierte Lichtquelle (2), die dazu ausgelegt ist, ein Lichtmuster zu emittieren;
- einen Stützzylinder (3) mit einer Zylinderoberfläche (30) und einem Haltevorsprung (31), der von der Zylinderoberfläche (30) vorsteht;
- ein Halteelement (4), das dazu angeordnet ist, den Haltevorsprung (31) mit dem Gehäuse (1) zu koppeln; und
- mehrere in dem Stützzylinder (3) gestützte Linsen (5), wobei die Linsen (5) dazu ausgelegt sind, das Lichtmuster zu projizieren;
- wobei der Stützzylinder (3) ferner mindestens ein vorstehendes Element (6) umfasst, das von der Zylinderoberfläche (30) in einem Abstand vorsteht, der größer als der Haltevorsprung (31) ist, und wobei das vorstehende Element eine vorstehende Rippe ist, um Wärme von dem Stützzylinder abzuleiten
**dadurch gekennzeichnet, dass** das vorstehende Element (6) umlaufend um die Zylinderoberfläche (30) herum angeordnet ist, wodurch ein gesamter Umfang der Zylinderoberfläche (30) bedeckt ist, und dadurch, dass das vorstehende Element (6) in einer Ableitrichtung (d) um einen Abstand von der Zylinderoberfläche (30) vorsteht, der größer als in den übrigen Richtungen ist.

2. Fahrzeugbeleuchtungsvorrichtung (10) nach Anspruch 1, die mehr als eine Lichtquelle (2) umfasst.

3. Fahrzeugbeleuchtungsvorrichtung (10) nach einem der vorhergehenden Ansprüche, die mehr als ein vorstehendes Element (6) umfasst.

4. Fahrzeugbeleuchtungsvorrichtung (10) nach Anspruch 3, wobei zwei benachbarte vorstehende Elemente (6) um mindestens 1 cm getrennt sind.

5. Fahrzeugbeleuchtungsvorrichtung (10) nach Anspruch 1, wobei das vorstehende Element (6), radial von der Zylinderoberfläche (30) gemessen, in einer Ableitrichtung (d) um einen Abstand von mehr als 2 cm und insbesondere mehr als 5 cm von der Zylinderoberfläche (30) vorsteht.

6. Fahrzeugbeleuchtungsvorrichtung (10) nach einem der vorhergehenden Ansprüche, wobei das vorstehende Element (6) eine Dicke aufweist, die zwischen 1 mm und 5 mm umfasst.

7. Fahrzeugbeleuchtungsvorrichtung (10) nach einem der vorhergehenden Ansprüche, wobei das vorstehende Element (6) gebogen ist.

8. Fahrzeugbeleuchtungsvorrichtung (10) nach Anspruch 7, wobei das vorstehende Element (6) mehr als einmal gebogen ist.

9. Fahrzeugbeleuchtungsvorrichtung (10) nach einem der vorhergehenden Ansprüche, wobei das vorstehende Element (6) im gleichen Teil wie der Zylinder (3) hergestellt ist, wodurch es eine Einzelblockanordnung aufweist.

10. Fahrzeugbeleuchtungsvorrichtung nach einem der Ansprüche 1 bis 7, wobei das vorstehende Element (6) ein von dem Zylinder (3) getrenntes Teil ist und an der Zylinderoberfläche (30) befestigt ist.

## Revendications

1. Dispositif d'éclairage de véhicule (10) comprenant :
• un logement (1) ;
- une source de lumière (2) installée dans le logement (1), configurée pour émettre un motif lumineux ;
- un barillet de support (3), avec une surface de barillet (30) et une partie saillante de support (31) faisant saillie à partir de la surface de barillet (30) ;
- un élément de support (4), agencé pour accoupler la partie saillante de support (31) au logement (1) ; et
- une pluralité de lentilles (5) supportées dans le barillet de support (3), les lentilles (5) étant configurées pour projeter le motif lumineux ;
- dans lequel le barillet de support (3) comprend en outre au moins un élément saillant (6) qui fait saillie à partir de la surface de barillet (30) d'une distance supérieure à la partie saillante de support (31) et dans lequel l'élément saillant est une ailette saillante destinée à dissiper de la chaleur du barillet de support **caractérisé en ce que** l'élément saillant (6) est agencé de manière circonférentielle autour de la surface de barillet (30), couvrant une circonférence totale de la surface de barillet (30) et **en ce que** l'élément saillant (6) fait saillie à partir de la surface de barillet (30) dans une direction de dissipation (d) d'une distance plus grande que dans le reste des directions.

2. Dispositif d'éclairage de véhicule (10) selon la revendication 1, comprenant plus d'une source de lumière (2).

3. Dispositif d'éclairage de véhicule (10) selon l'une quelconque des revendications précédentes, comprenant plus d'un élément saillant (6).

4. Dispositif d'éclairage de véhicule (10) selon la revendication 3, dans lequel deux éléments saillants adjacents (6) sont séparés d'au moins 1 cm.

5. Dispositif d'éclairage de véhicule (10) selon la revendication 1, dans lequel l'élément saillant (6) fait saillie à partir de la surface de barillet (30) dans une direction de dissipation (d) d'une distance supérieure à 2 cm, et en particulier supérieure à 5 cm, mesurée radialement à partir de la surface de barillet (30).

6. Dispositif d'éclairage de véhicule (10) selon l'une quelconque des revendications précédentes, dans lequel l'élément saillant (6) a une épaisseur comprise entre 1 mm et 5 mm.

7. Dispositif d'éclairage de véhicule (10) selon l'une quelconque des revendications précédentes, dans lequel l'élément saillant (6) est plié.

8. Dispositif d'éclairage de véhicule (10) selon la revendication 7, dans lequel l'élément saillant (6) est plié plus d'une fois.

9. Dispositif d'éclairage de véhicule (10) selon l'une quelconque des revendications précédentes, dans lequel l'élément saillant (6) est fabriqué dans la même partie que le barillet (3), ayant un agencement d'un seul bloc.

10. Dispositif d'éclairage de véhicule selon l'une quelconque des revendications 1 à 7, dans lequel l'élément saillant (6) est une partie séparée du barillet (3) et est fixé à la surface de barillet (30).
